# EUROPEAN PATENT APPLICATION

(11) **EP 3 919 330 A1**
(43) Date of publication of application: **08.12.2021**
(21) Application number: 20748238.1
(22) Date of filing: 24.01.2020
(51) Int. Cl.: B60S 1/54, B60S 1/60

(54) **CAMERA CLEANING DEVICE AND CONTROL METHOD**

(30) Priority: 29.01.2019 JP 2019013562
(71) Applicant: Kyocera Corporation, Kyoto-shi, Kyoto 612-8501 (JP)
(72) Inventor: IDA Yousuke, Kyoto-shi, Kyoto 612-8501 (JP); NAKAO Hiroshi, Kyoto-shi, Kyoto 612-8501 (JP)
(74) Representative: Viering, Jentschura & Partner mbB Patent- und Rechtsanwälte
(86) International application number: PCT/JP2020/002567
(87) International publication number: WO 2020/158614

(57) **Abstract**

A camera cleaning device 10 includes an air intake port 12, a camera 13, and a flow path 14. The air intake port 12 is located in an internal combustion engine room ER of a mobile body 11. The camera 13 is mounted on the mobile body 11. The flow path 14 allows a fluid to flow from the air intake port 12 to an optical system of the camera 13.

## Description

### Cross-Reference to Related Applications

The present application claims priority from Japanese Patent Application No. 2019-13562 filed in Japan on January 29, 2019, the entire disclosure of which is hereby incorporated by reference.

### Technical Field

The present invention relates to a camera cleaning device and a control method.

### Background Art

In recent years, a mobile body such as a vehicle has been equipped with a camera for driving assistance. It is desired that an optical system of the camera be clean so that an image captured by the camera is appropriately used. On the other hand, the outermost surface of an optical system of a camera equipped in a mobile body is typically located outside the mobile body. Thus, the outermost surface of the optical system may be soiled by mud, dust, waterdrops, and the like. Accordingly, it has been proposed to clean the surface of an optical system by blowing air (see PTL 1).

### Citation List

### Patent Literature

PTL 1: Japanese Unexamined Patent Application Publication No. 2001-171491

### Summary of Invention

A camera cleaning device according to a first aspect includes
an air intake port located in an internal combustion engine room of a mobile body,
a camera mounted on the mobile body, and
a flow path that allows a fluid to flow from the air intake port to an optical system of the camera.

A control method according to a second aspect is
a control method for a camera cleaning device including an air intake port located in an internal combustion engine room equipped with an internal combustion engine in a mobile body, a camera mounted on the mobile body, a flow path that allows a fluid to flow from the air intake port to an optical system of the camera, a compressor that is driven by a power source based on the internal combustion engine and that compresses a fluid taken through the air intake port, and a clutch that switches between connection and disconnection of transmission of power from the power source to the compressor, the control method being a method of switching the clutch to either of transmission and interruption, the control method including
acquiring information on the internal combustion engine, and
switching the clutch to either of connection and disconnection on the basis of the information on the internal combustion engine.

### Brief Description of Drawings

[Fig. 1] Fig. 1 is a layout diagram illustrating positions of elements of a camera cleaning device according to the present embodiment mounted in a mobile body.
[Fig. 2] Fig. 2 is a schematic diagram illustrating a schematic configuration of the camera cleaning device in Fig. 1.
[Fig. 3] Fig. 3 is a flowchart for describing a camera cleaning process executed by a control unit in Fig. 2.
[Fig. 4] Fig. 4 is a schematic diagram illustrating a schematic configuration of a camera cleaning device according to a second embodiment.
[Fig. 5] Fig. 5 is a schematic diagram illustrating a modification example of the camera cleaning device in Fig. 2.

### Description of Embodiments

Hereinafter, a description will be given of an embodiment of a fixed structure to which the present invention is applied, with reference to the drawings.

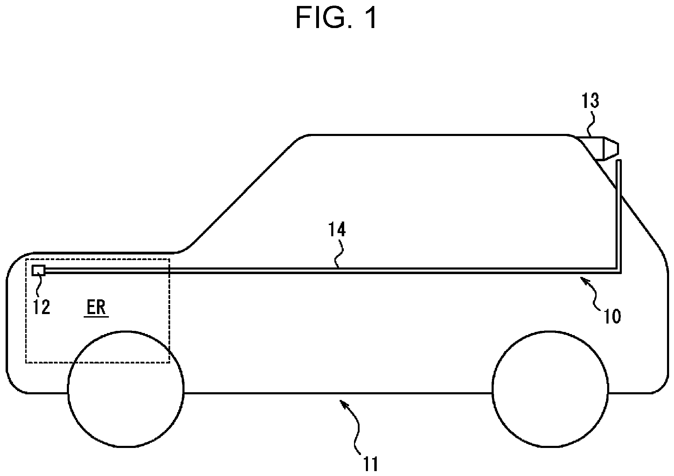

A camera cleaning device 10 according to a first embodiment of the present disclosure is, for example, mounted in a mobile body 11 as illustrated in Fig. 1.

The mobile body 11 may include, for example, a vehicle, a ship, an aircraft, and the like. The vehicle may include, for example, an automobile, an industrial vehicle, a railroad vehicle, a household vehicle, a fixed-wing aircraft that runs along a runway, and the like. The automobile may include, for example, a passenger car, a truck, a bus, a two-wheeled vehicle, a trolley bus, and the like. The industrial vehicle may include, for example, an industrial vehicle for agriculture, an industrial vehicle for construction, and the like. The industrial vehicle may include, for example, a forklift, a golf cart, and the like. The industrial vehicle for agriculture may include, for example, a tractor, a cultivator, a transplanter, a binder, a combine harvester, a mower, and the like. The industrial vehicle for construction may include, for example, a bulldozer, a scraper, an excavator, a crane truck, a dump car, a road roller, and the like. The vehicle may include a human-powered vehicle. The categories of vehicle are not limited to the above-described examples. For example, the automobile may include an industrial vehicle capable of running along a road. The same vehicle may be included in a plurality of categories. The ship may include, for example, Marine Jet, a boat, a tanker, and the like. The aircraft may include, for example, a fixed-wing aircraft, a rotary-wing aircraft, and the like.

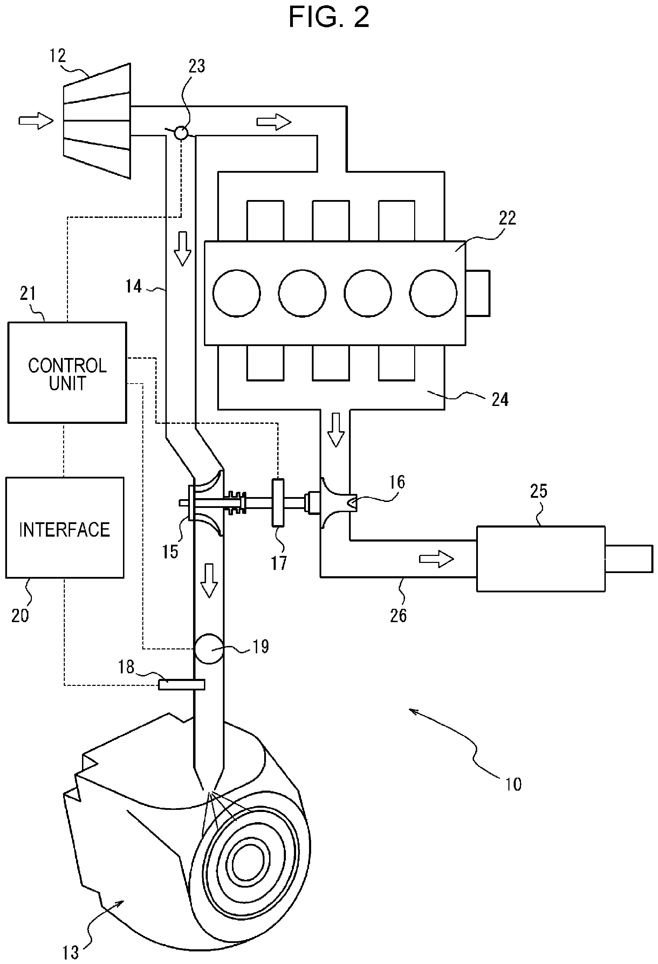

The camera cleaning device 10 includes an air intake port 12, a camera 13, and a flow path 14. As illustrated in Fig. 2, the camera cleaning device 10 may further include a compressor 15, a power source 16, a clutch 17, a pressure sensor 18, a pressure adjusting valve 19, an interface 20, and a control unit 21.

As illustrated in Fig. 1, the air intake port 12 is located in an internal combustion engine room ER in the mobile body 11. The internal combustion engine room ER is a space in which an internal combustion engine is disposed in the mobile body 11. The air intake port 12 may include an air cleaner. As illustrated in Fig. 2, the air intake port 12 for the camera cleaning device 10 may also be used as an air intake port for supplying air to the internal combustion engine 22. In the configuration of common use, a branch valve 23 may be disposed in the flow path 14. A portion of the flow path 14 from the air intake port 12 to the branch valve 23 is also used as an intake path for supplying air to the internal combustion engine 22. Opening or closing of the branch valve 23 switches between flowing of a fluid to an end portion on the camera 13 side of the flow path 14 and interruption thereof. The branch valve 23 is opened or closed on the basis of control by the control unit 21, thereby switching between flowing and interruption.

The camera 13 is mounted at a certain position of the mobile body 11 so as to be capable of capturing an image of scenery around the mobile body 11. For example, the camera 13 may be disposed in a rear portion of the mobile body 11 as illustrated in Fig. 1, or may be disposed in a front portion, a left portion, or a right portion thereof. Furthermore, the mobile body 11 may be equipped with a plurality of cameras 13.

The flow path 14 is, for example, pipe-shaped, and extends from the air intake port 12 to the vicinity of an optical system of the camera 13. The flow path 14 can allow a fluid, such as air flowing into the air intake port 12, to flow to the vicinity of the optical system of the camera 13. The optical system of the camera 13 means an optical element, such as a lens or cover glass, disposed on the outermost side in the optical system of the camera 13.

The compressor 15 is disposed in the flow path 14. The compressor 15 is driven by the power source 16 based on the internal combustion engine 22, thereby compressing a fluid taken through the air intake port 12 and allowing the fluid to flow toward the lens of the camera 13, as described below.

The power source 16 is, for example, a turbine. The power source 16 is disposed in an exhaust path 26 of the internal combustion engine 22 between an exhaust manifold 24 and a muffler 25. The power source 16 is rotated by an exhaust flow of the internal combustion engine 22, thereby converting the exhaust flow to power for driving the compressor 15.

The clutch 17 is, for example, an electromagnetic clutch. The clutch 17 switches between transmission and interruption of power from the power source 16 to the compressor 15. The clutch 17 switches between transmission and interruption on the basis of control by the control unit 21.

The pressure sensor 18 is disposed downstream of the compressor 15, that is, at an end portion closer than the compressor 15 to the camera 13. The pressure sensor 18 detects the pressure of a fluid in the flow path 14 at the installation position thereof. The pressure sensor 18 notifies the interface 20 of the detected pressure.

The pressure adjusting valve 19 is disposed downstream of the compressor 15, that is, at an end portion closer than the compressor 15 to the camera 13. The pressure adjusting valve 19 adjusts the pressure of a fluid that is to be ejected from the flow path 14. The pressure adjusting valve 19 changes the opening degree of the valve on the basis of control by the control unit 21, thereby adjusting the pressure.

The interface 20 acquires information from various devices. The interface 20 transmits information or instructions to various devices. The interface 20 acquires, for example, a pressure value from the pressure sensor 18. The interface 20 acquires, for example, from an engine electronic control unit (ECU), information on the internal combustion engine 22, such as the occurrence of an anomaly in the internal combustion engine 22 and a temperature of the internal combustion engine room ER.

The control unit 21 includes one or more processors and a memory. The processor may include at least either of a general-purpose processor that causes a specific program to be read and executes a specific function, and a dedicated processor specialized for specific processing. The dedicated processor may include an application specific integrated circuit (ASIC). The processor may include a programmable logic device (PLD). The PLD may include a field-programmable gate array (FPGA). The control unit 21 may include at least either of a system-on-a-chip (SoC) in which one or a plurality of processors cooperate with each other, and a system in a package (SiP). The control unit 21 controls the operations of the individual elements of the camera cleaning device 10.

The control unit 21 switches the clutch 17 to either of transmission and interruption on the basis of at least one of information on the internal combustion engine 22 acquired by the interface 20 and a pressure value acquired from the pressure sensor 18, for example. Furthermore, the control unit 21 may switch between opening and closing of the branch valve 23 on the basis of at least one of information on the internal combustion engine 22 acquired by the interface 20 and a pressure value acquired from the pressure sensor 18, for example.

Regarding switching of the clutch 17, the control unit 21 estimates a temperature in the flow path 14 at an end portion on the optical system side of the camera 13 of the flow path 14 by using, as information on the internal combustion engine 22, a temperature of the internal combustion engine room ER, or an intake air temperature in the configuration in which the air intake port 12 is shared. The estimation of the temperature is performed on the basis of a known temperature gradient in the flow path 14, a design value of the compressor 15, or the like. The control unit 21 may acquire a temperature from a temperature sensor that directly detects a temperature in the flow path 14 at the end portion on the optical system side of the flow path 14. The control unit 21 switches the clutch 17 to transmission if the estimated temperature or detected temperature is higher than or equal to a temperature threshold. The temperature threshold is set to a temperature that does not freeze the optical system of the camera 13, for example, 5°C. Furthermore, the control unit 21 may open the branch valve 23 if the estimated temperature or detected temperature is higher than or equal to the temperature threshold.

Regarding switching of the clutch 17, the control unit 21 determines that an anomaly has occurred in the internal combustion engine 22 by using the occurrence of an anomaly in the internal combustion engine 22 as information on the internal combustion engine 22. The control unit 21 switches the clutch 17 to interruption if the control unit 21 determines that an anomaly has occurred in the internal combustion engine 22. Furthermore, the control unit 21 may close the branch valve 23 if the control unit 21 determines that an anomaly has occurred in the internal combustion engine 22.

Regarding switching of the clutch 17, the control unit 21 determines, on the basis of a pressure value acquired from the pressure sensor 18 in a state in which the compressor 15 is increasing a pressure, whether clogging has occurred in an exhaust nozzle of the flow path 14. If the pressure value is greater than a pressure threshold, the control unit 21 determines that clogging has occurred in the exhaust nozzle. The pressure threshold is set to a pressure value at which clogging may occur, for example, a predetermined value greater than atmospheric pressure. The control unit 21 switches the clutch 17 to interruption if the control unit 21 determines that clogging has occurred in the exhaust nozzle. Furthermore, the control unit 21 may close the branch valve 23 if the control unit 21 determines that clogging has occurred in the exhaust nozzle. In addition, if the control unit 21 determines that clogging has occurred in the exhaust nozzle, the control unit 21 may give, to an external device such as a display via the interface 20, a warning indicating the occurrence of a nozzle anomaly, without performing or while performing disengagement of the clutch 17 and closing of the branch valve 23. The external device that has acquired the warning may notify a passenger of the occurrence of the nozzle anomaly.

The control unit 21 may adjust the opening degree of the pressure adjusting valve 19 on the basis of a pressure value acquired from the pressure sensor 18. For example, the control unit 21 may adjust the opening degree of the pressure adjusting valve 19 so as to obtain a pressure value equal to a predetermined ejection pressure. The predetermined ejection pressure is set to a value greater than atmospheric pressure and smaller than the pressure threshold.

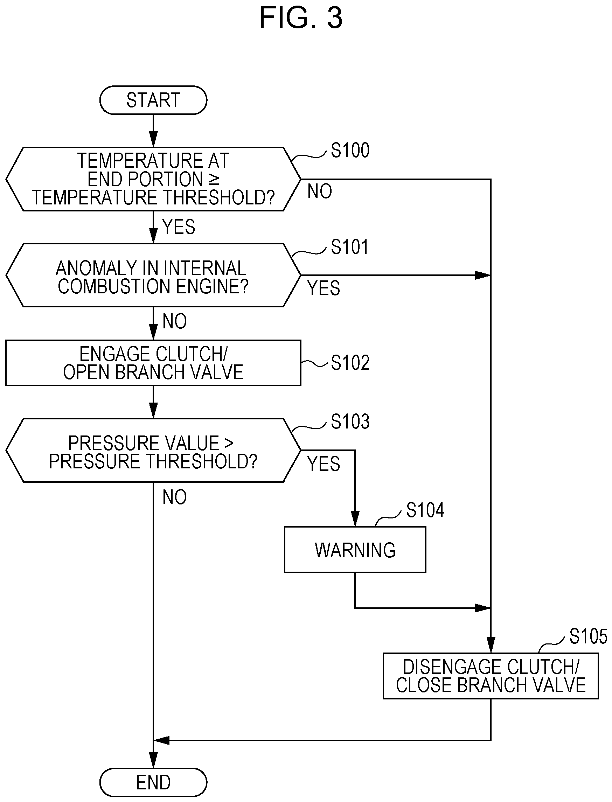

Next, a camera cleaning process executed by the control unit 21 in the first embodiment will be described with reference to the flowchart in Fig. 3. The camera cleaning process is periodically started.

In step S100, the control unit 21 determines, on the basis of information on the internal combustion engine 22, whether a temperature in the flow path 14 at the end portion on the camera 13 side of the flow path 14 is higher than or equal to a temperature threshold. If the temperature in the flow path 14 at the end portion is higher than or equal to the temperature threshold, the process proceeds to step S101. If the temperature in the flow path 14 at the end portion is lower than the temperature threshold, the process proceeds to step S105.

In step S101, the control unit 21 determines, on the basis of information about the internal combustion engine 22, whether an anomaly has occurred in the internal combustion engine 22. If no anomaly has occurred in the internal combustion engine 22, the process proceeds to step S102. If an anomaly has occurred in the internal combustion engine 22, the process proceeds to step S105.

In step S102, the control unit 21 brings the clutch 17 into engagement to achieve switching to a power transmission state. In addition, the control unit 21 opens the branch valve 23. After the engagement of the clutch 17 and the opening of the branch valve 23, the process proceeds to step S103.

In step S103, the control unit 21 determines whether a pressure value detected by the pressure sensor 18 is greater than a pressure threshold. If the pressure value is greater than the pressure threshold, the process proceeds to step S104. If the pressure value is smaller than or equal to the pressure threshold, the camera cleaning process ends with the clutch 17 being in a transmission state and the branch valve 23 remaining open.

In step S104, the control unit 21 generates a warning indicating that clogging has occurred in the exhaust nozzle of the flow path 14 and gives the warning to an external device. After the warning has been given, the process proceeds to step S105.

In step S105, the control unit 21 brings the clutch 17 into disengagement. In addition, the control unit 21 closes the branch valve 23. After the disengagement of the clutch 17 and the closing of the branch valve 23, the camera cleaning process ends.

In the camera cleaning device 10 according to the first embodiment having the above-described configuration, the air intake port 12 that can take air into the flow path 14 extending to the optical system of the camera 13 is located in the internal combustion engine room ER. If the temperature of air blown to the optical system of the camera is low, condensation or freezing can occur at the surface of the optical system. On the other hand, in the camera cleaning device 10 having the above-described configuration, the air intake port 12 is located in the internal combustion engine room ER where the temperature is higher than an outside air temperature, and thus the temperature of air blown to the optical system of the camera 13 can be relatively high. Thus, in the camera cleaning device 10, the occurrence of condensation or the possibility of freezing at the surface of the optical system can be reduced. Thus, the camera cleaning device 10 can more reliably remove soil of the optical system of the camera 13.

The camera cleaning device 10 according to the first embodiment includes the compressor 15 that is driven by the power source 16 based on the internal combustion engine 22 and that compresses a fluid taken through the air intake port 12. With this configuration, in the camera cleaning device 10, air to be blown to the optical system can be compressed without using a driving source that is relatively large and that uses power, such as a motor. Thus, the camera cleaning device 10 can reduce the amount of power consumption and can reduce the space occupied thereby in the space of the internal combustion engine room ER.

The camera cleaning device 10 according to the first embodiment includes the clutch 17 that switches between transmission and interruption of power from the power source 16 to the compressor 15. Thus, the camera cleaning device 10 is capable of switching the influence of the camera cleaning device 10 on driving of the internal combustion engine 22.

In the camera cleaning device 10 according to the first embodiment, the control unit 21 switches the clutch 17 to either of transmission and interruption on the basis of information on the internal combustion engine 22. Thus, the camera cleaning device 10 can determine, on the basis of the state of the internal combustion engine 22, whether to perform camera cleaning, and switch between driving and stopping of the compressor 15.

The camera cleaning device 10 according to the first embodiment switches the clutch 17 to transmission if it is determined that a temperature in the flow path 14 at the end portion on the optical system side of the flow path 14 is higher than or equal to a threshold. Thus, the camera cleaning device 10 can further reduce the occurrence of condensation or the possibility of freezing at the surface of the optical system of the camera 13.

The camera cleaning device 10 according to the first embodiment switches the clutch 17 to interruption if it is determined that an anomaly has occurred in the internal combustion engine 22. Thus, if the driving of the internal combustion engine 22 is unstable, the camera cleaning device 10 can switch the clutch 17 to interruption and reduce the load of the camera cleaning device 10 on the internal combustion engine 22. Thus, the camera cleaning device 10 can preferentially stabilize the driving of the internal combustion engine 22 if the driving of the internal combustion engine 22 is unstable.

Next, a camera cleaning device 100 according to a second embodiment of the present disclosure will be described. The second embodiment is different from the first embodiment in the configurations of the flow path and the compressor. Hereinafter, the second embodiment will be described mainly about differences from the first embodiment. The parts having the same configurations as those in the first embodiment are denoted by the same reference numerals.

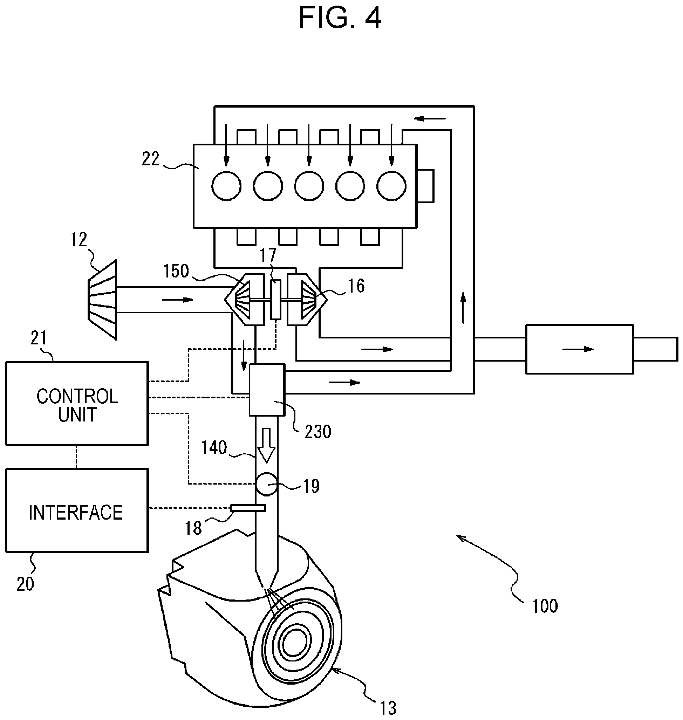

As illustrated in Fig. 4, the camera cleaning device 100 according to the second embodiment includes, as in the first embodiment, an air intake port 12, a camera 13, a flow path 140, a compressor 150, a power source 16, a clutch 17, a pressure sensor 18, a pressure adjusting valve 19, an interface 20, and a control unit 21. In the second embodiment, the configurations of the air intake port 12, the camera 13, the power source 16, the clutch 17, the pressure sensor 18, the pressure adjusting valve 19, the interface 20, and the control unit 21 are the same as those in the first embodiment.

In the second embodiment, a branch valve 230 is disposed downstream of the compressor 150 in the flow path 140, that is, at an end portion side on the camera 13 side in the flow path 140. Thus, the compressor 150 is disposed in a portion of the flow path 140, the portion being between the air intake port 12 and the branch valve 230 and being also used as an intake path for supplying air to the internal combustion engine 22. In other words, the compressor 150 is used as a supercharger of the internal combustion engine 22. In a configuration in which an intercooler is disposed for the compressor 150, the branch valve 230 is disposed upstream of the intercooler.

Also in the camera cleaning device 100 according to the second embodiment having the above-described configuration, the air intake port 12 that can take air into the flow path 140 extending to the optical system of the camera 13 is located in the internal combustion engine room ER. Thus, the camera cleaning device 100 can more reliably remove soil of the optical system of the camera 13. The camera cleaning device 100 according to the second embodiment includes the compressor 150 that is driven by the power source 16 based on the internal combustion engine 22 and that compresses a fluid taken through the air intake port 12. Thus, the camera cleaning device 10 can reduce the amount of power consumption and can reduce the space occupied thereby in the space of the internal combustion engine room ER. The camera cleaning device 100 according to the second embodiment includes the clutch 17 that switches between transmission and interruption of power from the power source 16 to the compressor 150. Thus, the camera cleaning device 100 is capable of switching the influence of the camera cleaning device 10 on driving of the internal combustion engine 22. In the camera cleaning device 100 according to the second embodiment, the control unit 21 switches the clutch 17 to either of transmission and interruption on the basis of information on the internal combustion engine 22. Thus, the camera cleaning device 100 can determine whether to perform camera cleaning and switch between driving and stopping of the compressor 150. The camera cleaning device 100 according to the second embodiment switches the clutch 17 to transmission if it is determined that a temperature in the flow path 140 at the end portion on the optical system side of the flow path 140 is higher than or equal to a threshold. Thus, the camera cleaning device 100 can further reduce the occurrence of condensation or the possibility of freezing at the surface of the optical system of the camera 13. The camera cleaning device 100 according to the second embodiment switches the clutch 17 to interruption if it is determined that an anomaly has occurred in the internal combustion engine 22. Thus, the camera cleaning device 100 can preferentially stabilize the driving of the internal combustion engine 22 if the driving of the internal combustion engine 22 is unstable.

The present invention has been described on the basis of the drawings and embodiments. Note that a person skilled in the art could easily make various changes and modifications on the basis of the present disclosure. Thus, note that the changes and modifications are included in the scope of the present invention.

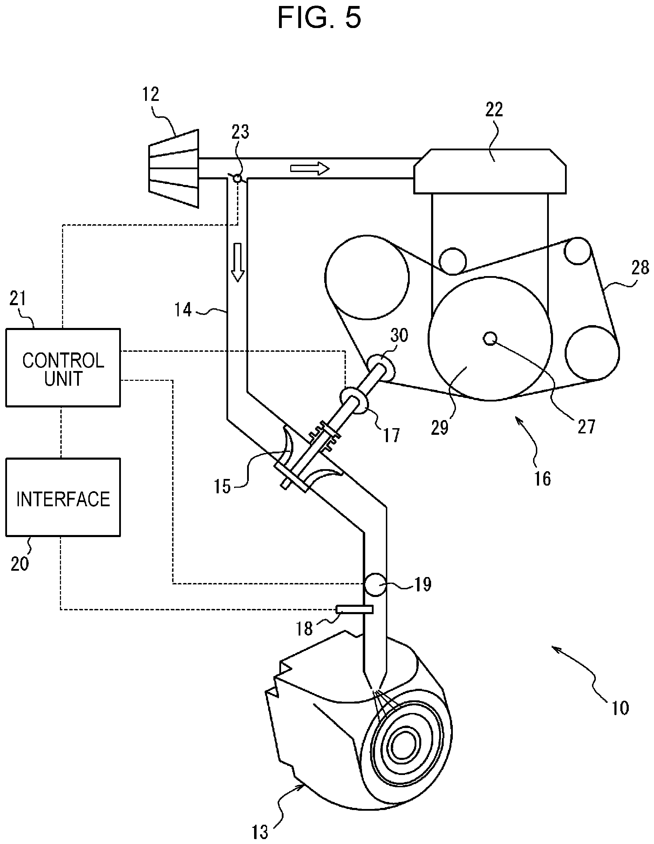

For example, in the first embodiment and the second embodiment, the power source 16 is a turbine. Alternatively, the power source 16 may be another type of power source capable of outputting power on the basis of driving of the internal combustion engine 22. For example, as illustrated in Fig. 5, the power source 16 may be an output of the internal combustion engine 22. The output of the internal combustion engine 22 is a rotation force of an output shaft 27. The output shaft 27 is, for example, connected to a pulley 29 around which a timing belt 28 is wound, and the clutch 17 is connected to an output pulley 30 around which the timing belt 28 is wound. With this configuration, an output of the internal combustion engine 22 is used as the power source 16.

In the first embodiment, the air intake port 12 has a configuration of also being used as an air intake port for supplying air to the internal combustion engine 22. However, the air intake port 12 may be independent.

Many aspects of the contents of the present disclosure are shown as a series of operations executed by a computer system or other hardware capable of executing program instructions. The computer system or other hardware includes, for example, a general-purpose computer, a personal computer (PC), a dedicated computer, a work station, a personal communications system (PCS), a mobile (cellular) phone, a mobile phone having a data processing function, an RFID receiver, a game machine, an electronic note pad, a laptop computer, a Global Positioning System (GPS) receiver, or other programmable data processing devices. Note that, in each embodiment, various operations are executed by a dedicated circuit (for example, individual logic gates connected to each other to execute a specific function) implemented by program instructions (software), or a logic block or program module executed by one or more processors. The one or more processors that execute the logic block or program module include, for example, one or more microprocessors, central processing units (CPUs), application specific integrated circuits (ASICs), digital signal processors (DSPs), programmable logic devices (PLDs), field programmable gate arrays (FPGAs), processors, controllers, microcontrollers, microprocessors, electronic devices, other devices designed to be capable of executing the functions described herein, and/or any combination thereof. The embodiments described herein are implemented by, for example, hardware, software, firmware, middleware, microcode, or ay combination thereof. An instruction may be a program code or code segment for executing a necessary task. An instruction can be stored in a machine-readable non-transitory storage medium or other media. A code segment may indicate any combination of a procedure, a function, a sub-program, a program, a routine, a subroutine, a module, a software package, a class or instruction, and a data structure or program statement. A code segment transmits and/or receives information, a data argument, a variable, or stored content to and/or from another code segment or a hardware circuit. Accordingly, the code segment is connected to the other code segment or the hardware circuit.

### Reference Signs List

- 10, 100: camera cleaning device
- 11: mobile body
- 12: air intake port
- 13: camera
- 14, 140: flow path
- 15, 150: compressor
- 16: power source
- 17: clutch
- 18: pressure sensor
- 19: pressure adjusting valve
- 20: interface
- 21: control unit
- 22: internal combustion engine
- 23, 230: branch valve
- 24: exhaust manifold
- 25: muffler
- 26: exhaust path
- 27: output shaft
- 28: timing belt
- 29: pulley
- 30: output pulley

## Claims

1. A camera cleaning device comprising:
an air intake port located in an internal combustion engine room of a mobile body;
a camera mounted on the mobile body; and
a flow path that allows a fluid to flow from the air intake port to an optical system of the camera.

2. The camera cleaning device according to Claim 1, further comprising
a compressor that is driven by a power source based on an internal combustion engine in the internal combustion engine room and that compresses a fluid taken through the air intake port.

3. The camera cleaning device according to Claim 2, wherein
the power source drives the compressor by using power obtained by converting an exhaust flow of the internal combustion engine.

4. The camera cleaning device according to Claim 2, wherein
the power source drives the compressor by using power of an output shaft of the internal combustion engine.

5. The camera cleaning device according to any one of Claims 2 to 4, further comprising
a clutch that switches between transmission and interruption of power from the power source to the compressor.

6. The camera cleaning device according to Claim 5, further comprising:
an interface that acquires information on the internal combustion engine; and
a control unit that switches the clutch to either of transmission and interruption on the basis of the information on the internal combustion engine.

7. The camera cleaning device according to Claim 6, wherein
the control unit switches the clutch to transmission if the control unit determines, on the basis of the information on the internal combustion engine, that a temperature in the flow path at an end portion on the optical system side of the flow path is higher than or equal to a threshold.

8. The camera cleaning device according to Claim 6 or 7, wherein
the control unit switches the clutch to interruption if the control unit determines, on the basis of the information on the internal combustion engine, that an anomaly has occurred in the internal combustion engine.

9. A control method for a camera cleaning device including an air intake port located in an internal combustion engine room equipped with an internal combustion engine in a mobile body, a camera mounted on the mobile body, a flow path that allows a fluid to flow from the air intake port to an optical system of the camera, a compressor that is driven by a power source based on the internal combustion engine and that compresses a fluid taken through the air intake port, and a clutch that switches between connection and disconnection of transmission of power from the power source to the compressor, the control method being a method of switching the clutch to either of transmission and interruption, the control method comprising:
acquiring information on the internal combustion engine; and
switching the clutch to either of connection and disconnection on the basis of the information on the internal combustion engine.
